Europäisches Patentamt

**European Patent Office**

**Office européen des brevets**

(19)

(11) Numéro de publication : **0 013 849**
**B1**

(12) **FASCICULE DE BREVET EUROPÉEN**

(45) Date de publication du fascicule du brevet :
28.04.82

(21) Numéro de dépôt : **79400991.0**

(22) Date de dépôt : **07.12.79**

(51) Int. Cl.³ : **A 47 C 13/00, B 60 N 1/10**

(54) **Perfectionnements aux sièges transformables pour véhicules automobiles.**

(30) Priorité : **29.01.79 FR 7902206**

(43) Date de publication de la demande :
**06.08.80 (Bulletin 80/16)**

(45) Mention de la délivrance du brevet :
**28.04.82 Bulletin 82/17**

(84) Etats contractants désignés :
**DE GB IT**

(56) Documents cités :
**FR - A - 1 503 650**
**FR - A - 2 377 901**
**GB - A - 623 528**
**GB - A - 1 076 020**

(73) Titulaire : **AUTOMOBILES PEUGEOT**
**75, avenue de la Grande Armée**
**F-75116 Paris (FR)**

**SOCIETE ANONYME AUTOMOBILES CITROEN**
**117 à 167, Quai André Citroen**
**F-75747 Paris Cedex 15 (FR)**

(72) Inventeur : **Duguet, Pierre**
**15 Pré des Coulous**
**F-78810 Feucherolles (FR)**
Inventeur : **Robert, Christian**
**6, rue du Closeau**
**F-91580 Etrechy (FR)**

(74) Mandataire : **Moncheny, Michel et al**
**c/o Cabinet Lavoix 2 Place d'Estienne d'Orves**
**F-75441 Paris Cedex 09 (FR)**

Imprimerie Jouve, 18, rue St-Denis, 75001 Paris, France

Perfectionnements aux sièges transformables pour véhicules automobiles

La présente invention concerne les sièges transformables tels qu'on en utilise en particulier, à l'arrière des véhicules de type semi-utilitaire ou break.

Elle s'applique plus précisément aux sièges du type comportant une assise montée de façon à pouvoir basculer sur environ 180° autour d'un axe transversal situé au voisinage de sa partie avant et un dossier rabattable vers l'avant sur environ 90°, autour d'un axe transversal situé vers sa partie inférieure. Le siège peut ainsi occuper une position dite normale pour laquelle il remplit sa fonction de siège et une position dite utilitaire dégageant un volume de chargement plus important. Un tel siège est décrit dans le document GB-A-623.528.

Le but de l'invention est de doter un tel siège de moyens particulièrement simples répondant simultanément aux conditions suivantes :
— permettre une manipulation aisée de l'assise ;
— assurer l'appui avant de l'assise dans sa position utilitaire ;
— protéger la face arrière du dossier d'un siège avant adjacent lorsque le siège arrière est en position utilitaire.

Pour obtenir ce résultat, un siège du type précité, est caractérisé en ce que, sur au moins un côté de l'assise est disposée une poignée de manœuvre articulée sur l'assise autour d'un axe transversal, cette poignée étant associée à un panneau de protection disposé à plat sous l'assise en position normale d'utilisation et relevable en étant à peu près perpendiculaire à l'assise, en position utilitaire, la poignée délimitant une surface d'appui pour l'assise en position utilitaire.

Un exemple de réalisation de l'invention fait l'objet de la description qui suit, en référence aux dessins joints dans lesquels :

la figure 1 montre, vu en perspective et de côté, un siège arrière de véhicule en position normale d'utilisation ;

la figure 2 montre le même siège, en cours de transformation ;

la figure 3 montre le siège en position utilitaire ;

la figure 4 représente, en position utilitaire, l'autre côté du siège, dans le cas où les places arrière sont séparées ;

les figures 5 et 6 représentent en élévation latérale un détail de la figure 4, pour deux positions différentes de l'assise.

On a représenté, sur les figures, un siège arrière de véhicule, comprenant une assise 1 et un dossier 2.

L'assise 1 est articulée à sa partie avant autour d'un axe transversal X-X, entre deux supports 3, 4 fixés sur le plancher 5 du véhicule.

Le dossier 2 est articulé à sa partie inférieure autour d'un axe Y-Y, parallèle à l'axe X-X sur des supports tels que 6 solidaires de la carrosserie.

Une poignée de manœuvre 7 est disposée sur le côté de l'assise proche de la portière ou de la paroi latérale adjacent du véhicule. Cette poignée est articulée autour d'un axe Z-Z également transversal, sur une ferrure 8 solidaire du fond 9 de l'assise. Ce fond 9 est de préférence plan.

Sur la poignée 7 sont fixées deux tiges 10 portant un panneau de protection 11 qui, en position normale d'utilisation du siège, est disposé à plat sous le fond 9 de l'assise.

Du côté du siège situé vers le centre du véhicule (Fig. 4 à 6), les tiges 10 sont fixées sur un bras 12 articulé, autour de l'axe Z-Z, sur une ferrure 13 solidaire du fond 9 de l'assise. Le bras 12 porte un ergot 14 qui s'engage dans une lumière 15 d'un pied 16 articulé en 17 sur la ferrure 13. Ce pied 16 est destiné à coopérer par son extrémité libre 16a opposée à l'axe 17 avec un support 18 fixé sur le plancher 9 et délimitant un logement 18a.

La poignée 7 comporte un prolongement 19, situé au-delà de son axe d'articulation Z-Z, et destiné à servir de pied pour l'assise 1 lorsque cette dernière est en position utilitaire. Dans cette position, le pied 19 coopère avec un support 20 fixé sur le plancher 9 et délimitant un logement 20a.

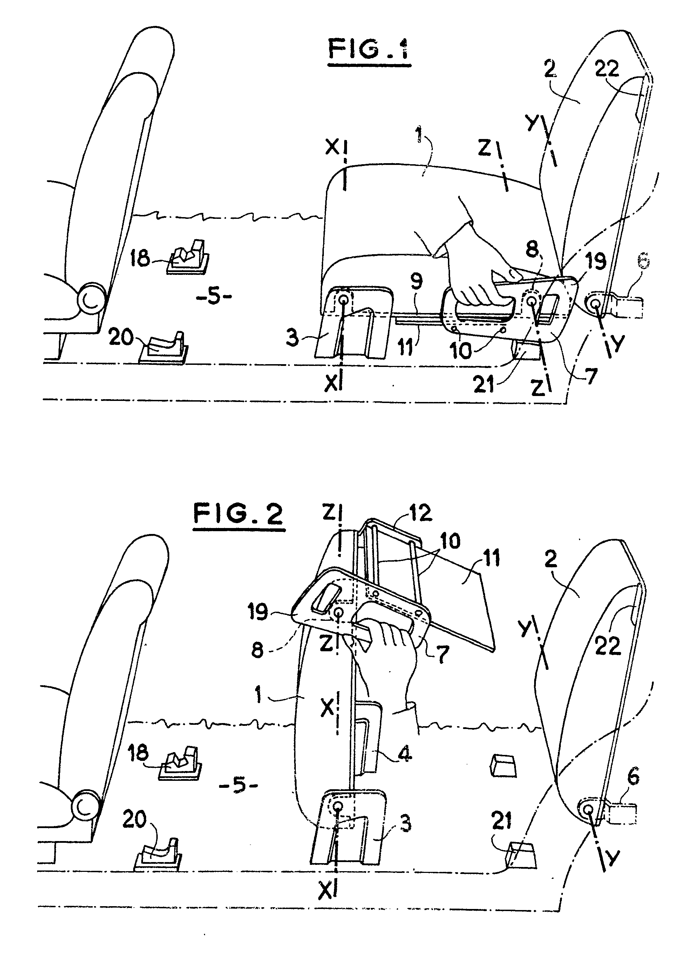

Enfin, un support 21 situé à la verticale de l'axe Z-Z sert d'appui pour la poignée 7, donc pour l'assise 1, lorsque celle-ci est en position normale d'utilisation du siège (Fig. 1).

Comme il apparaît clairement sur les figures, lorsque le siège est placé en position normale pour recevoir un passager (Fig. 1), la poignée 7 repose sur le support 21, le panneau 11 est plaqué sous le fond 9 de l'assise et le pied 16 est sensiblement horizontal, le long de l'assise (Fig. 5).

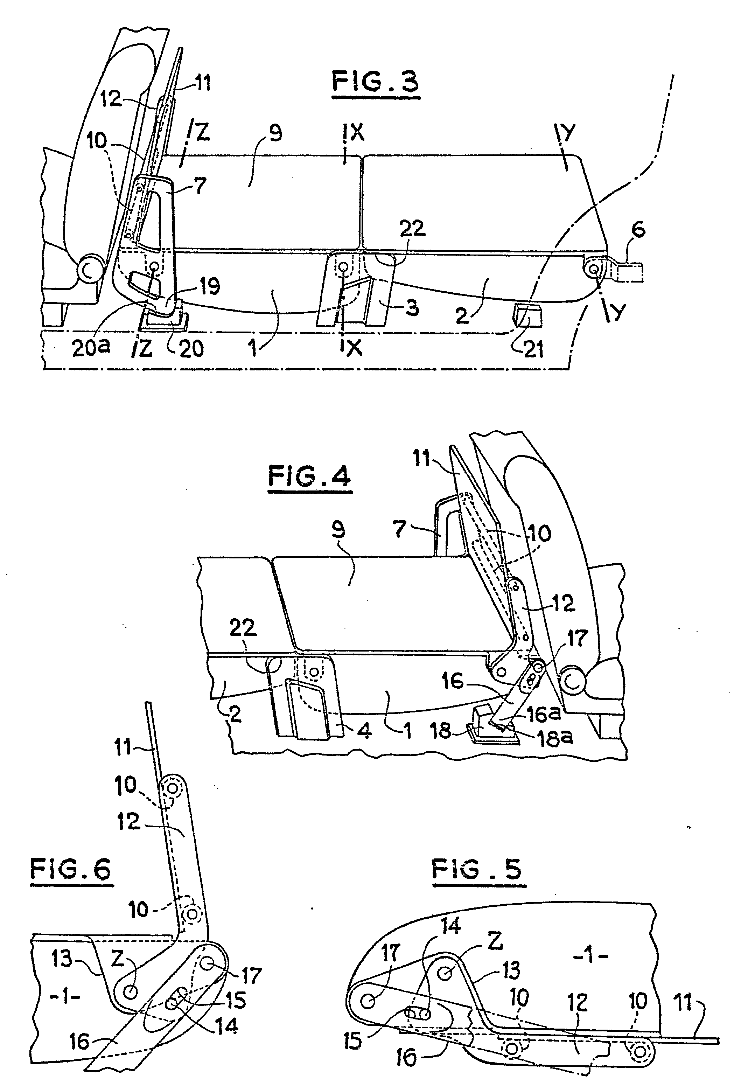

Pour basculer l'assise vers l'avant, on utilise la poignée 7. Tout en basculant l'assise, on fait tourner la poignée 7, ce qui a pour effet de redresser à la fois le panneau 11 et les pieds 19 et 16. En fin de rotation de la poignée, le panneau 11 se trouve placé dans une position sensiblement verticale (Fig. 3) derrière le dossier du siège avant, l'assise s'appuyant sur le plancher par l'intermédiaire des pieds 16, 19 coopérant avec les supports 18, 20. Les poignées 7 servent également d'organes de retenue latérale pour des charges supportées par le plancher constitué par la face arrière du dossier et le fond de l'assise.

On remarquera également, qu'en position utilitaire, les supports 3 et 4 servent d'appui pour le dossier 2, après rabattement vers l'avant, ce dossier comportant à cet effet des rebords latéraux 22 ou autres organes de butée appropriés.

Dans l'exemple décrit, on a supposé que le véhicule comportait à l'arrière deux sièges individuels distincts. Il est bien évident que l'invention s'applique également si les deux sièges sont réunis en une banquette unique. Dans ce cas, il est souhaitable de disposer une poignée telle que 7 de chaque côté de la banquette de façon à permettre la manœuvre à partir de l'une ou l'autre des portières arrière du véhicule.

**Revendications**

1. Siège transformable, en particulier pour véhicule automobile, comportant une assise (1) montée de façon à pouvoir basculer sur environ 180° autour d'un axe transversal (X-X) situé au voisinage de sa partie avant et un dossier (2) rabattable vers l'avant sur environ 90°, autour d'un axe transversal (Y-Y) situé vers sa partie inférieure, caractérisé en ce que, sur au moins un côté de l'assise (1) est disposée une poignée de manœuvre (7) articulée sur l'assise autour d'un axe transversal (Z-Z), cette poignée étant associée à un panneau de protection (11) disposé à plat sous l'assise en position normale d'utilisation et relevable en étant à peu près perpendiculaire à l'assise, en position utilitaire, la poignée délimitant une surface d'appui (19) pour l'assise en position utilitaire.

2. Siège suivant la revendication 1, constituant une banquette, caractérisé en ce qu'il comporte deux mécanismes identiques disposées symétriquement sur ses deux côtés.

3. Siège suivant la revendication 1, constituant un siège individuel, caractérisé en ce que, du côté situé vers le centre du véhicule, le panneau (1) est solidaire d'un bras (12) articulé sur l'assise (1) autour de l'axe (Z-Z), ce bras (12) portant un ergot (14) qui s'engage dans une lumière (15) d'un pied (16) également articulé sur l'assise (en 17).

4. Siège suivant la revendication 3, caractérisé en ce que le bras (12) et le pied (16) sont articulés sur une même ferrure (13) solidaire du fond de l'assise.

5. Siège suivant l'une quelconque des revendications 1 à 4, caractérisé en ce que, en position utilitaire, la poignée (7) sert de butée latérale pour une charge.

6. Agencement d'un siège suivant l'une quelconque des revendications 1 à 5 dans un véhicule automobile, caractérisé en ce que le plancher du véhicule porte deux supports (18, 20), recevant, en position utilitaire, les pieds (16) ou les surfaces d'appui (19) des poignées (7).

7. Agencement suivant la revendication 6, caractérisé en ce que l'assise (1) est articulée entre deux supports (3, 4) qui servent d'appui pour le dossier (2), en position utilitaire.

8. Agencement suivant l'une quelconque des revendications 6 et 7, caractérisé en ce que, en position normale, la ou chaque poignée (7) est en appui sur un support (21) porté par le plancher.

**Claims**

1. Convertible seat structure, in particular for an automobile vehicle, comprising a seat (1) mounted to be pivotable through about 180° about a transverse axis (X-X) located in the vicinity of its front part, and a backrest (2) which is capable of being swung over forwardly through about 90° about a transverse axis (Y-Y) located adjacent its lower part, characterized in that on at least one side of the seat (1) there is disposed an actuating handle (7) which is mounted on the seat to pivot about a transverse axis (Z-Z), said handle being associated with a protecting panel (11) which is disposed flat under the seat in the normal position of utilization and is raisable so as to be roughly perpendicular to the seat, in the utility position, the handle defining a support (19) surface for the seat in the utility position.

2. Seat structure as claimed in claim 1, constituting a bench-type seat structure, characterized in that it comprises two identical mechanisms disposed symmetrically on both sides of the seat structure.

3. Seat structure as claimed in claim 1, constituting an individual seat structure, characterized in that on the side located near the centre of the vehicle, the panel (11) is rigid with an arm (12) which is mounted on the seat (1) to pivot about the axis (Z-Z), said arm (12) carrying a pin (14) which is engaged in a slot (15) formed in a leg (16) which is also pivotally mounted on the seat (at 17).

4. Seat structure as claimed in claim 3, characterized in that the arm (12) and the leg (16) are pivotally mounted on the same member (13) rigid with the bottom of the seat.

5. Seat structure as claimed in any one of the claims 1 to 4, characterized in that the handle (7) acts as a lateral abutment for a load in the utility position.

6. Arrangement of a seat structure according to any one of the claims 1 to 5 in an automobile vehicle, characterized in that the floor of the vehicle carries two supports (18, 20) which receive the legs (16) or the support surface (19) of the handles (7), in the utility position.

7. Arrangement as claimed in claim 6, characterized in that the seat (1) is pivotally mounted between two supports (3, 4) which act as a support for the backrest (2), in the utility position.

8. Arrangement as claimed in claim 6 or 7, characterized in that the or each handle (7) bears against a support (21) carried by the floor, in the normal position.

**Ansprüche**

1. Umwandelbarer Sitz, insbesondere für Kraftfahrzeuge, mit einem Stitzunterteil, das um eine in Nähe seines Vorderteiles angeordnete Querachse (X-X) schwenkbar gelagert ist, und mit einem Lehnenteil (7), das um eine in Nähe seines Unterteils angeordnete Querachse (Y-Y) um etwa 90° nach vorn umklappbar ist, dadurch gekennzeichnet, dass auf wenigstens einer Seite des Sitzunterteils (1) ein Betätigungsgriff (7) angeordnet ist, der über eine Querachse (Z-Z) am Sitzunterteil angelenkt ist, wobei der Handgriff mit einer Schutzplatte (11) verbunden ist, die in normaler Gebrauchsstellung flach unter dem Sitzunterteil angeordnet und in Betriebsstellung etwa senkrecht zum Sitzunterteil anhebbar ist, wobei der Handgriff für das in Betriebsstellung befindliche Sitzunterteil eine Stützfläche (19) aufweist.

2. Sitz nach Anspruch 1, der als Sitzbank ausgebildet ist, gekennzeichnet durch zwei symmetrisch an seinen beiden Seiten angeordnete identische Mechanismen.

3. Sitz nach Anspruch 1, der als Einzelsitz ausgebildet ist, dadurch gekennzeichnet, dass die Platte (11) auf der an der Mitte des Fahrzeugs befindlichen Seite mit einem über der Achse (Z-Z) am Sitzunterteil (1) angelenkten Arm 12) fest verbunden ist, wobei der Arm (12) einen Fortsatz (14) aufweist, der in einen Ausschnitt (15) eines ebenfalls am Sitzunterteil (bei 17) angelenkten Fusses (16) eingreift.

4. Sitz nach Anspruch 3, dadurch gekennzeichnet, dass der Arm (12) und der Fuss (16) an ein und demselben mit dem Boden des Sitzunterteils fest verbundenen Beschlag (13) angelenkt sind.

5. Sitz nach einem der Ansprüche 1 bis 4, dadurch gekennzeichnet, dass in Betriebsstellung der Handgriff (7) als seitliche Abstützung für eine Last dient.

6. Anordnung eines Sitzes nach einem der Ansprüche 1 bis 5 in einem Kraftfahrzeug, dadurch gekennzeichnet, dass der Boden des Kraftfahrzeugs zwei Stützen (18, 20) aufweist, die in Betriebsstellung die Füsse (16) oder die Stützfläche (19) der Handgriffe (7) aufnehmen.

7. Anordnung nach Anspruch 6, dadurch gekennzeichnet, dass das Sitzunterteil zwischen zwei Stützen (3, 4) angelenkt ist, die in Betriebsstellung als Anlage für das Lehnenteil (2) dienen.

8. Anordnung nach einem der Ansprüche 6 und 7, dadurch gekennzeichnet, dass in normaler Stellung der oder jeder Handgriff (7) an einer vom Boden getragenen Stütze (21) anliegt.

FIG.1

FIG.2

## FIG.3

## FIG.4

## FIG.6

## FIG.5